# EUROPEAN PATENT APPLICATION

(11) **EP 1 380 213 A1**
(43) Date of publication of application: **14.01.2004**
(21) Application number: 03013109.8
(22) Date of filing: 11.06.2003
(51) Int. Cl.: A23G 9/28, A23G 9/16, A23G 9/12

(54) **Door of composite structure for machines for the batchwise production of ice cream**

(30) Priority: 10.07.2002 IT GE20020014
(71) Applicant: ALI S.p.A. - CARPIGIANI GROUP, 40011 Anzola Emilia (Bologna) (IT)
(72) Inventor: Cocchi, Gino, 40137 Bologna (IT); Zaniboni, Gianni, 40044 Borgonuovo di Sasso Marconi (IT)
(74) Representative: Porsia, Attilio, Dr.

(57) **Abstract**

Door (5) for machine (1) for the batchwise production of ice cream, consisting of a box-like structure in stainless steel sheet (7), the internal hollow space of which is filled with a foamed resin (8). The depth of the ice cream discharge port (9) provided in the said box-like structure is many times that of known doors, thus appreciably reducing the danger of accidents at work due to the imprudent introduction of the fingers through the protective grille (10) of the said discharge port (9).

## Description

The present invention relates to machines for the batchwise production of ice cream, and more specifically it relates to doors for the closure of the freezing chamber of such machines.

These doors are currently fabricated in steel or plastic, or in plastic coated on the outside with a sheet of stainless steel. All these constructions are excessively heavy. Moreover, at the bottom of these doors is a rather large port closed by a moveable hatch for discharging the prepared ice cream. To prevent accidents this port must be provided with a grating to prevent the passage of the operator's hand, while allowing the passage of the prepared ice cream. However, it is possible for the operator's fingers to be inserted through this grating and it has been observed that, owing to the lack of thickness of conventional closing doors, this fact could easily be a source of accidents at work.

The object of the present invention is therefore to provide a door for the said machines that will obviate the abovementioned disadvantages of known doors.

In accordance with the principal characteristic of this invention, this object is achieved by producing the door of such machines in the form of a box-like structure of stainless steel sheet, the internal hollow space of which is filled with a foamed resin. This gives a structure which, though lighter than solid plastic structures or steel structures, has better heat-insulating properties and can be cleaned completely much more easily than such doors.

Also, because these doors are much thicker than conventional doors, there is the not insignificant advantage that the thickness of the ice cream discharge port is significantly greater than that of conventional plastic or steel doors, which means that, in addition, the danger of the operator's fingers passing inadvertently through the grating into the region of the stirrer of the machine, and hence into the area of danger to the operator, is eliminated.

Lastly, the inside as well as the outside of the door can also be cleaned more easily and more thoroughly as the whole of its external structure is made of stainless steel.

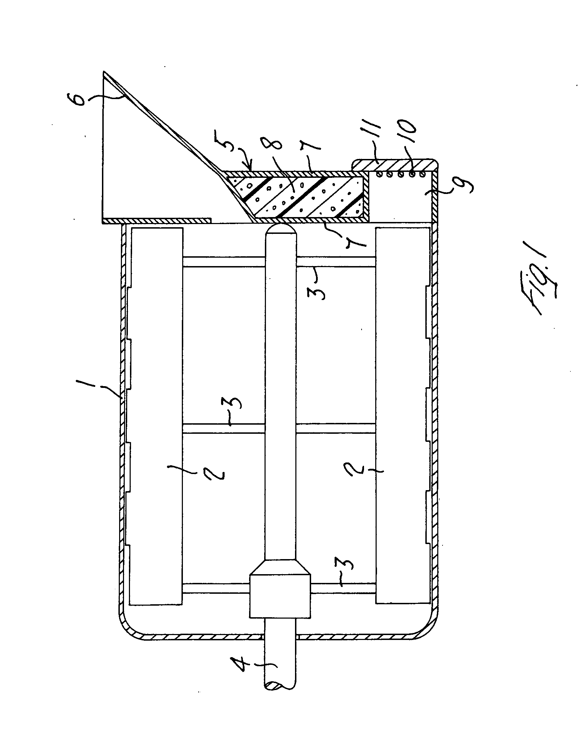

Other objects and characteristics of the door according to the invention will become clearer in the course of the following description of a preferred embodiment thereof, reference being had to the accompanying drawing, the single figure of which shows a longitudinal section through the freezing chamber of a machine for the batchwise production of ice cream, equipped with a door for its closure according to the present invention.

Referring to the drawing, the number 1 indicates the cylindrical freezing chamber of a machine for the batchwise production of ice creams. This chamber 1 is closed at the rear, but is open at the front end. It is in a heat-exchange relationship with the evaporator (not shown) of a refrigerating system, and operating inside it is the stirrer-scrapper element 2, carried on the spokes 3 attached to the shaft 4. This shaft 4 is turned by a suitable motor (not shown).

The front end or mouth of the chamber 1 is equipped with a door 5 hinged to the side of this chamber 1. The door 5 has a filling hopper 6 at the top for introducing the liquid ice cream mixture into the chamber 1, and takes the form of a box-like structure composed of plates of stainless steel 7 enclosing a foamed plastic material 8 in their internal space. At the bottom, the door 5 has a port or opening 9 allowing communication between the interior of the chamber 1 and the exterior. As shown, the mouth of the said opening 9 is closed flush by a grille 10. The hatch 11 that closes the opening 9 completes the arrangement. Since the thickness of the door 5 is greater than, and even many times, that of conventional doors, the depth of the space of this opening 9 is much greater than in known doors, so that the danger of accidents at work due to the imprudent introduction of the fingers through the grille 10 is avoided.

## Claims

1. Door (5) for machine (1) for the batchwise production of ice cream, **characterized in that** the said door (5) is in the form of a box-like structure in stainless steel sheet (7), the internal hollow space of which is filled with a foamed resin (8).

2. Door according to Claim 1, **characterized in that**, because of the great thickness of the said box-like structure (7), the depth of the ice cream discharge port (9) is many times that of known doors, so that the danger of accidents at work due to the imprudent introduction of fingers through the protective grille (10) of the said discharge port (9) is appreciably reduced.
